# EUROPÄISCHE PATENTSCHRIFT

(11) **EP 2 112 097 B1**
(45) Veröffentlichungstag und Bekanntmachung des Hinweises auf die Patenterteilung: **23.03.2011**
(21) Anmeldenummer: 09150700.4
(22) Anmeldetag: 16.01.2009
(51) Int. Cl.: B65G 15/42, B65G 57/24

(54) **Vorrichtung und Verfahren zum Überführen von Gebindelagen in eine Beladestation**
Method and device for transferring layers of containers to a loading station
Dispositif et procédé destinés à transférer des couches de récipients dans une station de chargement

(30) Priorität: 23.04.2008 DE 102008002831
(43) Veröffentlichungstag der Anmeldung: 28.10.2009
(73) Patentinhaber: Krones AG, 93073 Neutraubling (DE)
(72) Erfinder: Perl, Kurt, 83253, Rimsting (DE); Haas, Johann, 83135, Schechen/Pfaffenhofen (DE); Zeiner, Peter, 83064, Raubling (DE)
(74) Vertreter: Reichert, Werner Franz

(56) Entgegenhaltungen:
- EP-A- 1 908 709
- US-A1- 2005 063 815

## Beschreibung

Die vorliegende Erfindung betrifft eine Vorrichtung zum Überführen von gruppierten Gebindelagen in eine Beladestation einer Transportvorrichtung entsprechend dem einleitenden Teil des Anspruchs 1, wie sie aus der EP-A-1908709 bekannt ist. Die Beladestation ist ein Jalousiekopf.

Ebenso betrifft die Erfindung ein Verfahren zum Überführen von gruppierten Gebindelagen in eine Beladestation einer Transportvorrichtung entsprechend dem einleitenden Teil des Anspruchs 14, wie es aus der EP-A-1909709 bekannt ist.

Bekannt sind Vorrichtungen, die Gebindelagen von Gruppierstationen mittels eines Schiebers oder auch mit Vertikalhub zur Leistungssteigerung beim Rückhub in eine Beladestation oder einen Jalousiegreiferkopf einschieben. Beim Einschieben in den Jalousiegreiferkopf entsteht ein Leistungsverlust von ca. 0,5 bis 1,0 Sekunden, bis der Schieber mit seiner Schieberplatte wieder aus dem Jalousiegreiferkopf herausgefahren ist.

Durch das europäische Patent EP 0 979 204 B1 ist eine Vorrichtung zur Übergabe von Stückgut zwischen zwei Förderern mit einander kreuzenden Förderrichtungen offenbart, wobei einer der Förderer als Zuführförderer und der andere als Übernahmeförderer ausgebildet ist. Im Kreuzungsbereich zwischen den beiden Förderern ist eine Vorschubeinrichtung angeordnet, die das Übergeben des Stückguts vom Zuführförderer auf den bandartigen Übernahmeförderer bewerkstelligt. Die Vorschubeinrichtung ist von einem Motor angetrieben, der auch die Kette antreibt. Ein Umsetzgetriebe der Vorschubeinrichtung verwandelt die rotatorische Bewegung des Motors in eine periodische lineare Hin- und Herbewegung eines Schiebers, dessen Vorschubrichtung schräg zu den Förderrichtungen der Förderer verläuft.

Aus der deutschen Patentschrift DE 10 2005 023 859 B4 ist eine Vorrichtung zum Zusammenführen von Gebinden, insbesondere Schrumpfpacks bekannt, umfassend einen kontinuierlichen antreibbaren Förderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebevorrichtung zum gruppenweisen Überführen der Gebinde auf den Schichtenbildungsplatz. Vom Schichtenbildungsplatz wird die gebildete Schicht einer Beladestation einer Transportvorrichtung zugeführt. Mit der Beladestation können Blöcke gebildet werden.

Der Erfindung liegt die Aufgabe zugrunde, bei der Überführung einer gruppierten Gebindelage in eine Transportvorrichtung die Taktzeit für die Überführung der Gebindelage in die Transportvorrichtung weiter zu reduzieren.

Diese Aufgabe wird gelöst, durch eine Vorrichtung, die die Merkmale des Anspruchs 1 umfasst.

Eine weitere Aufgabe der Erfindung ist, ein Verfahren zu schaffen, mit dem eine gruppierte Gebindelage unter Reduzierung der Taktzeit in eine Transportvorrichtung übergeführt wird.

Diese Aufgabe wird durch ein Verfahren gelöst, das die Merkmale des Anspruches 14 umfasst.

Die Vorrichtung umfasst einen aktiv angetriebenen Stetigförderer zum Transport der Gebindelagen in den Jalousiekopf. Der Jalousiekopf besitzt ein Sicherungselement, das als ein schwenkbarer Bügel ausgebildet ist und die Gebindelagen an der dem Stetigförderer zugewandten Seite sichert. Ebenso dient der schwenkbare Bügel dazu eine erst teilweise in den Jalousiekopf überführte Gebindelage mit einer zusätzlichen Bewegungskomponente in Transportrichtung zu beaufschlagen.

Gemäß einer bevorzugten Ausführungsform stellt der Stetigförderer einen Mattenförderer dar. Die nach oben gerichtete Fläche des Mattenförderers weist in Transportrichtung Rippen auf, die quer zur Transportrichtung der Gebindelage angeordnet sind und somit die Standsicherheit der Gebindelagen verbessern. Die Gebinde einer Gebindelage können z. B. mindestens zwei Flüssigkeitsbehälter umfassen, wie beispielsweise Flaschen, Dosen, Kunststoffbehälter, etc., die mit Folie oder Karton zu den einzelnen Gebinden zusammengehalten werden. Mit der gegenwärtigen Erfindung können Gebindelagen aus Gebinden verarbeitet werden, die aus mindestens zwei Gegenständen unterschiedlicher Art bestehen. Obwohl sich die nachkommende Beschreibung auf Gebinde aus Flüssigkeitsbehältern bezieht, soll das nicht als eine Beschränkung der Erfindung aufgefasst werden.

Der Mattenförderer weist in Transportrichtung der Gebindelagen in einer weiteren Ausführungsform der Erfindung einen höheren Reibungskoeffizienten auf als quer zur Transportrichtung der Gebindelagen. Dadurch ist ein Hin- und / oder Herschieben und / oder Gleiten der Gebindelagen, unabhängig ob aus foliiertem oder kartoniertem Material, ausgeschlossen.

Es hat sich gezeigt, dass es vorteilhaft ist, wenn bei dieser Vorrichtung die Gebindelagen auf dem sich bewegenden Mattenförderer reib- und / oder formschlüssig aufliegen. Insbesondere können in einer Ausführungsform die Gebindelagen mit den Rippen einen formschlüssigen Eingriff in die zu transportierende Richtung erhalten, beispielsweise infolge der Bindung der Einfassungen der Rippen in Gebinde. Demgegenüber ist die Verschiebung der Gebindelagen in die Beladestation der Transportvorrichtung aufgrund der quer zur Transportrichtung verlaufenden Rippen begünstigt, da in diesem Falle nur noch Gleitreibung auftritt.

Bei einer weiteren vorteilhaften Ausführungsform ist der Mattenförderer eine gerippte Mattenkette, wobei die Rippung quer zur Transportrichtung der Gebindelage angeordnet ist. Die gerippte Mattenkette, die wellenstruktur- oder sägezahnförmig ausgebildet ist, besteht aus Kunststoff, Stahl und / oder Edelstahl. Entscheidende Vorteile der Kunststoff-Mattenkette liegen in ihrem geringen Gewicht und der geringen Geräuschentwicklung während ihrer Nutzung. Ferner unterliegt die Kunststoff-Mattenkette keiner plastischen Verformung unter Überlast sowie keinem Ankleben oder Anfrieren der Gebindelagen auf der Kette.

Bevorzugt weist die Oberfläche der gerippten Mattenkette Bürsten, Leisten und / oder Noppen auf, aber auch weitere technische Weiterentwicklungen, die für den durchschnittlichen Fachmann in naheliegender Weise bekannt sind, werden hier zum Einsatz kommen, die in Transportrichtung eine größere Biegesteifigkeit aufweisen als quer zur Transportrichtung. Bürsten, Leisten, Noppen und / oder etc. können beim Beschleunigen und Abbremsen in Transportrichtung große Kräfte aufnehmen und somit ein Gleiten der Gebindelagen unterbinden. Für den Fall, dass die Bürsten, Leisten und / oder Noppen aus elastischen Kunststoff bestehen, lassen sich diese in Transportrichtung deformieren, so dass ein Verschieben der Gebindelagen in Transportrichtung unterstützt wird.

Speziell bei der Anordnung der Bürsten sind verschiedene Varianten möglich, wie beispielsweise integrierte gerade Bürsten oder integrierte in Förderrichtung angestellte Bürsten und / oder zur Mattenförderermitte angestellte Bürsten. Der Vorteil der zur Mattenförderermitte angestellten Bürsten liegt darin, dass ein Zentrieren der Lage quer zur Laufrichtung erleichtert wird.

Bei der Erfindung ist es von weiterem Vorteil, wenn die Oberfläche der gerippten Mattenkette beschichtet ist, beispielsweise durch Gummierung. Durch die Rippen in der Gummibeschichtung erhalten die Gebindelagen einen noch besseren Grip. Ein weiterer Vorteil besteht im Entwurf und aus dem Material der Gummierung der Beschichtung. Dies gewährt eine lange Lebensdauer der Mattenkette. Selbst für die meisten steigenden und senkenden Anwendungen ist die gummierte Mattenkette einsetzbar. Desgleichen gestattet diese Ausführungsform der Mattenkette eine optimale Unterstützung in der Rückführung durch die flachen Ebenen der Gummierung. Alternativ ist auch eine zumindest teilweise kontinuierliche Beschichtung des Fördergutes bei der gegenwärtigen Erfindung zweckdienlich.

Eine weitere Möglichkeit ist, dass die zumindest teilweise kontinuierliche Beschichtung mittels eines adhäsiven Mediums, wie z. B. mit Leim, versehen wird. Der Leim wird vom dem Gebinde aufgenommen und dient letztendlich zur Stabilisierung einer Gebindelage auf einer Palette, auf der mehrere Gebindelagen nacheinander abgelegt werden.

Erfindungsgemäß kann der Stetigförderer eine Vielzahl von Rollen aufweisen. Eine noch effizientere und effektivere Möglichkeit den in Transportrichtung wirksamen Widerstand zu vergrößern, ist, die Rollen gegebenenfalls zu gummieren, zu profilieren oder mit gleitretardierendem Material zu beschichten.

Alternativ kann der Mattenförderer durch integrierte Magnete den Transport der Gebindelagen in die Beladestation ermöglichen, wobei die Gebindelagen hierzu ferromagnetische Partikel aufweisen. Somit erfolgt der Transport über ein im Inneren des Mattenförderers verborgenes, umlaufendes Permanentmagnetsystem, welches mit seinen gebündelten, hochwirksamen Magnetfeldlinien die ferromagnetischen Gebinde erfasst und diese bis zur Beladestation transportiert.

In einer weiteren Ausführungsform ist der Mattenförderer mit einer Vielzahl von Durchbrüchen versehen. Zum Transport der Gebindelagen wird ein Unterdruck über die Durchbrüche angelegt. Die Durchbrüche können beispielsweise Löcher, Bohrungen und / oder Schlitze sein. Gebindelagen, die auf dem Transportband liegen, werden durch Unterdruck, der durch die Durchbrüche im Transportband wirkt, auf der Oberfläche des Transportbandes festgehalten. Die Bohrungen, Löcher und Schlitze dienen dazu, dass die Saugkraft, die von einem unterhalb des Transportbandes liegenden Behälter mit Unterdruck bereitgestellt wird, auf die zu überführenden Gebindelagen einwirken zu lassen. Somit ist auch die Reibung in Transportrichtung größer.

Die Verwendung von parallel angeordneten Rippen der Mattenkette ist bei der vorliegenden Erfindung möglich, aber auch Rippen, die im Winkel von 30 bis 60° zur Transportrichtung der Gebindelagen angeordnet sind. Nichtsdestoweniger kann aber auch jede andere Art von Profilierung gerade oder in einem Winkel zur Mitte der Kette ausgeführt werden, da dadurch ein Zentrieren während des Transportes ermöglicht wird. Dabei ist vorgesehen, dass die Rippen über die gesamte Breite des Transportförderers durchgehend sind. Im Gegensatz zu dieser gestalterisch einfacheren Ausführungsform, können die Rippen aber auch über die Breite des Transportförderers unterbrochen sein. Vorteilhafterweise sind die einzelnen Abschnitte angrenzender Rippen gegeneinander versetzt.

Bei einer weiteren vorteilhaften Ausführungsform weist die Beladestation der Transportvorrichtung einen schwenkbaren Bügel auf, der die Gebindelagen an der dem Stetigförderer zugewandten Seite sichert. Überdies kann der schwenkbare Bügel in einer weiteren Ausführungsform die Gebindelagen mit einer zusätzlichen Bewegungskomponente in Transportrichtung beaufschlagen, um die zumindest teilweise in der Beladestation bereits vorhandenen Gebindelagen weiter beziehungsweise komplett in den Jalousiegreiferkopf zu schieben. Dies bringt gerade bei problematisch zu verarbeitenden Gebinden einen großen Nutzen.

Ebenso ist es möglich, die Vielzahl der Rollen aktiv anzutreiben. Eine Variante ist der Antrieb der Einzelrollen durch Pneumatik. Ebenso wie die Kopplung der Rollen durch einen Riemen denkbar, über den die einzelnen Rollen angetrieben werden können. Die Rollen können mit einzelnen Elektromotoren versehen sein, so dass die Rollen individuell angetrieben werden können.

Die vorliegende Erfindung betrifft neben der oben beschriebenen Vorrichtung auch ein Verfahren zum Überführen von gruppierten Gebindelagen in eine Beladestation einer Transportvorrichtung. Dabei werden in einem Verfahrensschritt die Gebindelagen mittels eines aktiv angetriebenen Stetigförderers in die Beladestation transportiert. In einem weiteren Schritt werden die Gebindelagen durch den schwenkbaren Bügel der Beladestation an der dem Stetigförderers zugewandten Seite gesichert. Vorzugsweise wird die Gebindelage dabei durch den schwenkbaren Bügel in Transportrichtung mit einer zusätzlichen Bewegungskomponente beaufschlagt.

Weitere Merkmale, Ziele und Vorteile der vorliegenden Erfindung gehen aus der nun folgenden detaillierten Beschreibung mehrerer bevorzugter Ausführungsformen der Erfindung hervor, die als nicht einschränkende Beispiele dienen und auf die beigefügten Zeichnungen Bezug nehmen. Gleiche Bauteile weisen dabei grundsätzlich gleiche Bezugszeichen auf und werden teilweise nicht mehrfach erläutert.
Fig. 1 zeigt eine perspektivische Gesamtdarstellung der Vorrichtung, mit der durch den Stetigförderer in Transportrichtung zu überführenden gruppierten Gebindelage und der Beladestation der Transportvorrichtung.
Fig. 2 zeigt die schematische Draufsicht auf eine gerippte Mattenkette.
Fig. 3a-g zeigen jeweils in Seitenansicht verschiedener Ausführungsformen der Mattenkette, die gemäß der Erfindung Verwendung findet.
Fig. 4a-b zeigen jeweils eine schematische Seitenansicht einer abgewandelten Ausführungsform des Mattenförderers.
Fig. 4c zeigt eine weitere Ausführungsform des Stetigförderers wie er bei der gegenwärtigen Erfindung Verwendung findet.
Fig. 5a zeigt eine schematische Darstellung des Mattenförderers, wobei die Rollen einzeln angetrieben werden.
Fig. 5b zeigt eine teilweise Seitensicht der Ausgestaltung des Mattenförderers nach
Fig. 5a.

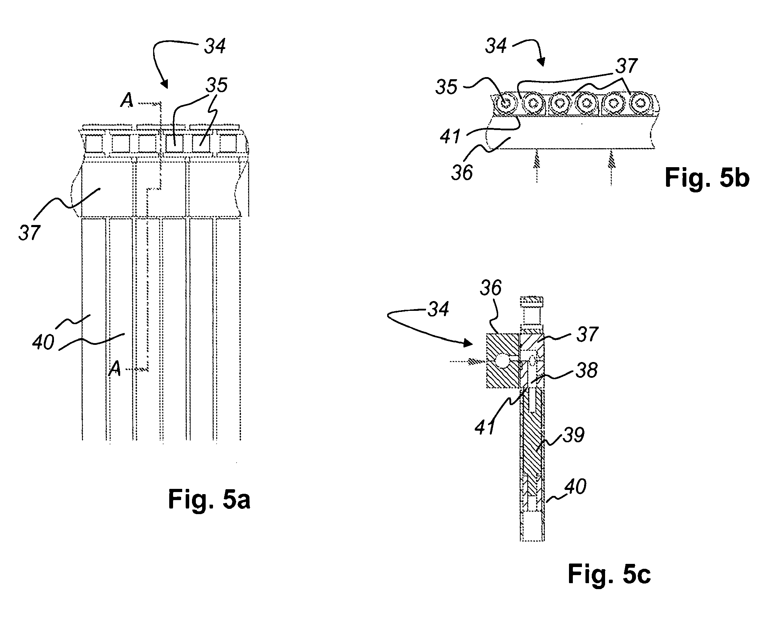

Fig. 5c zeigt eine Schnittansicht des Antriebs der einzelnen Rolle des Mattenförderers entlang der Linie A-A aus Fig. 5a.

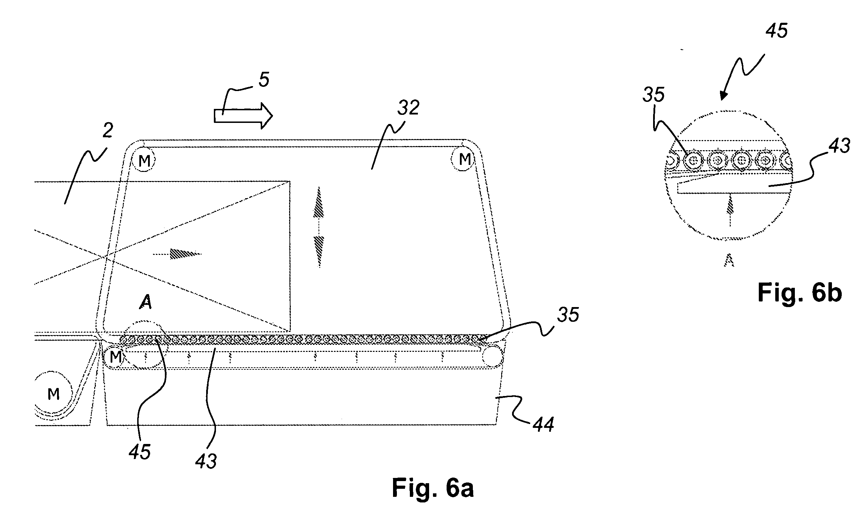

Fig. 6a zeigt eine Seitenansicht der Antriebseinrichtung des als Beladestation dienenden Jalousiekopfes.
Fig. 6b zeigt eine vergrößerte Ansicht des Ausschnitts der Riemeneinheit der Antriebseinrichtung nach Fig. 6a.

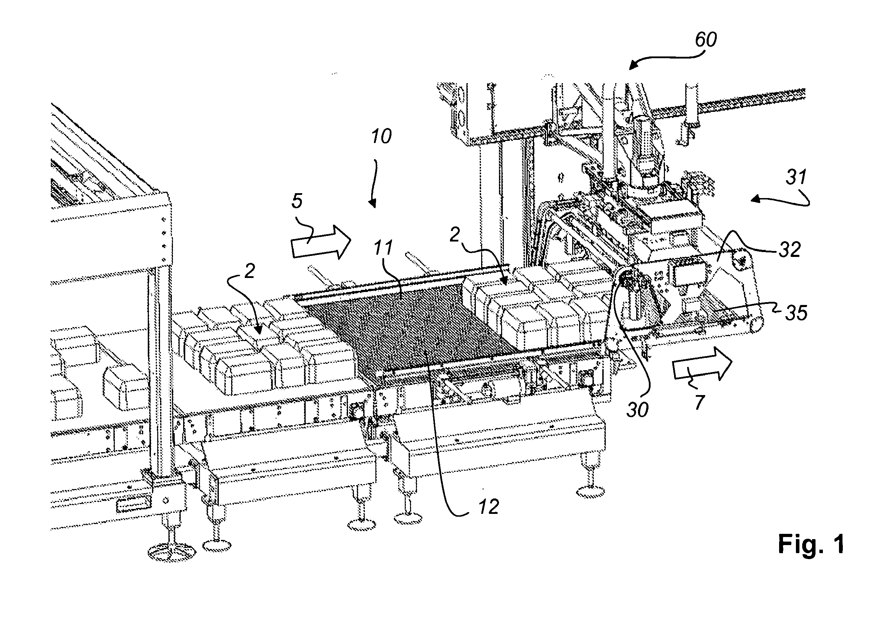

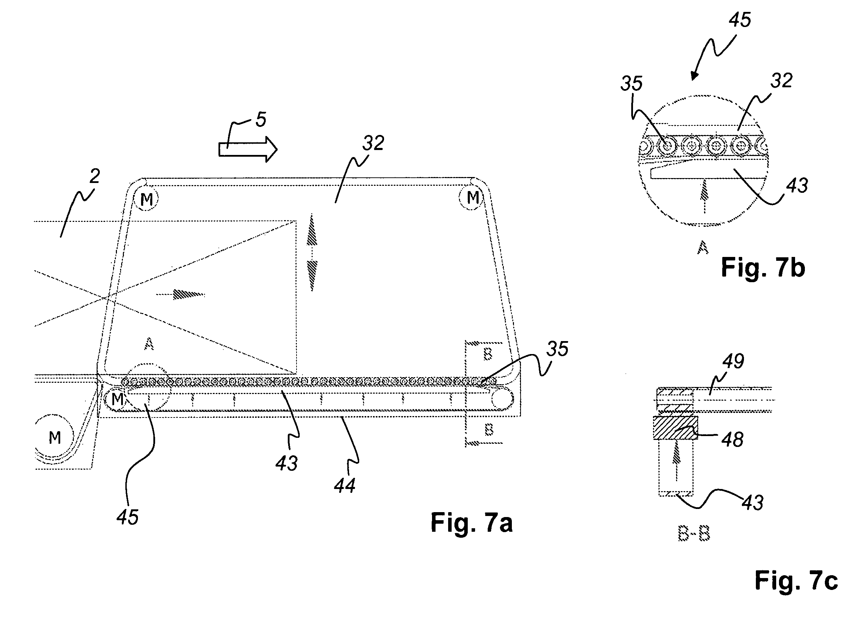

Fig. 7a zeigt eine weitere schematische Darstellung der Antriebseinrichtung des Jalousiekopfes nach Fig. 1 in der Seitenansicht.
Fig. 7b zeigt eine vergrößerte Ansicht des in Fig. 7a mit A gekennzeichneten Bereichs.
Fig. 7c zeigt eine Schnittansicht der Antriebseinrichtung entlang der Linie B-B aus Fig. 7a.

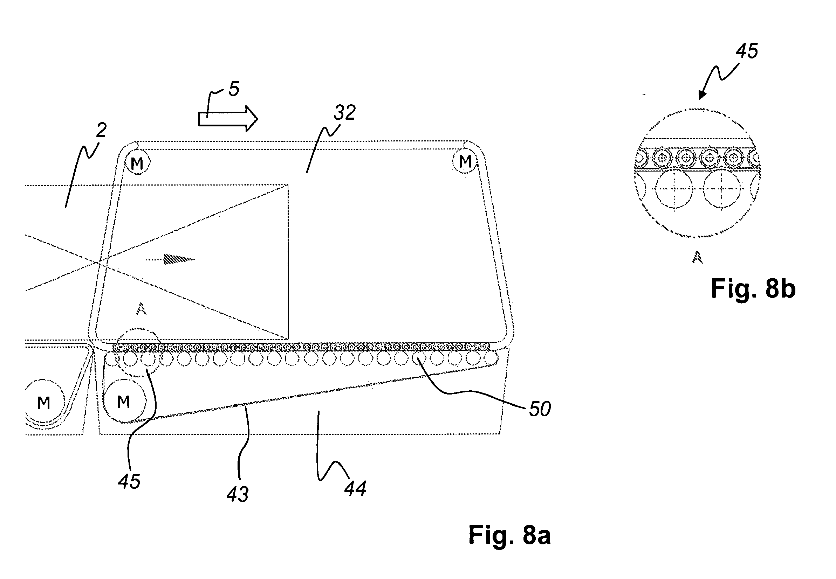

Fig. 8a zeigt eine weitere schematische Darstellung einer Ausführungsform des Antriebs des Jalousiekopfes in Seitenansicht.
Fig. 8b zeigt eine vergrößerte Darstellung des in Fig. 8a mit A gekennzeichneten Bereichs.

Figur 1 zeigt eine perspektivische Gesamtdarstellung der erfindungsgemäßen Vorrichtung 10 zum Überführen der gruppierten Gebindelagen 2 mittels eines kontinuierlich antreibbaren Stetigförderers 11 in die Beladestation 31 einer Transportvorrichtung 60. Bei der Ausführungsform der Vorrichtung 10 nach Figur 1 ist der Stetigförderer 11 ein Mattenförderer 12, was jedoch nicht als Beschränkung der Erfindung aufgefasst werden darf. Die Beladestation 31, hier als ein Jalousiekopf 32 ausgestaltet, umfasst einen schwenkbaren Bügel 30, der zum Sichern der Gebindelagen 2 an der dem Stetigförderer 11 zugewandten Seite vorgesehen ist. Ferner beaufschlagt der schwenkbare Bügel 30 die bereits zumindest teilweise der Beladestation 31 zugeführten Gebindelagen 2 mit einer zusätzlichen Bewegungskomponente 7 in Transportrichtung 5, um die zumindest teilweise in der Beladestation 31 bereits vorhandenen Gebindelagen 2 weiter beziehungsweise vollständig in den Jalousiekopf 32 zu schieben.

In der Beladestation 31 ist eine Vielzahl von Rollen 35 vorgesehen, die das Überführen der Gebindelage 2 in die Transportvorrichtung 60 erleichtern. Die Rollen 35 bilden eine Auflage für die jeweilige Gebindelage 2. Durch den kombinierten Transport von dem Stetigförderer 11 in die Beladestation 31 über die aktiv angetriebenen Rollen 35 wird eine erhebliche Zeiteinsparung beziehungsweise eine Reduzierung der Taktzeit erreicht.

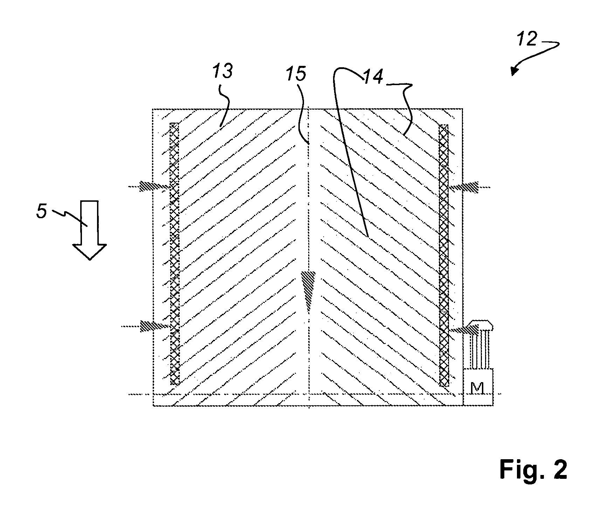

Figur 2 zeigt eine schematische Draufsicht auf den als Mattenförderer 12 ausgebildeten Stetigförderer 11. Der Mattenförderer 12 ist in Form einer gerippten Mattenkette 13 ausgebildet. Die Oberfläche des Mattenförderers 12 weist in Richtung der Abschiebung Rippen 14 auf. In der Ausführungsform nach Figur 2 sind die Rippen 14 der Mattenkette 13 parallel und in einem Winkel von 45° beziehungsweise -45° zur Transportrichtung 5 angeordnet. Dessen ungeachtet kann aber auch jede andere Art von Profilierung gerade oder in einem Winkel zur Kettenmitte 15 ausgeführt werden. Die Rippen 14 sind über die Breite der Mattenkette 13 unterbrochen, wobei dies lediglich nur ein Ausführungsbeispiel ist, welches nicht als Beschränkung der Erfindung aufgefasst werden kann. Es ist für den Fachmann selbstverständlich, wie die Anordnung der Rippen 14 zu gestalten ist, um eine optimale Förderung der Gebindelagen 2 zu erzielen.

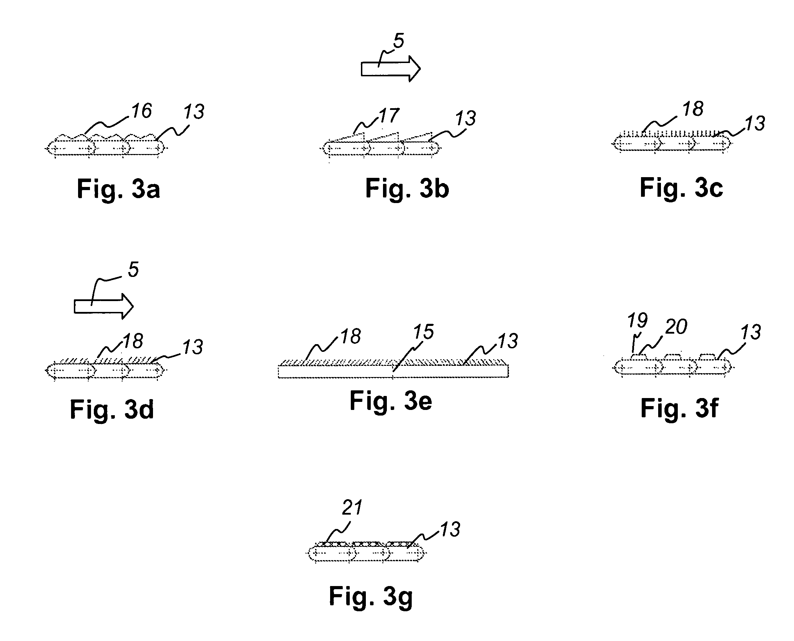

Die Figuren 3a bis 3g zeigen jeweils eine andere Ausführungsform der Mattenkette 13 in Seitenansicht. In Figur 3a hat die Mattenkette 13 eine wellenförmige Struktur 16 ausgebildet.

Bei der in Figur 3b gezeigten Ausführungsform ist eine sägezahnförmige Struktur 17, beispielsweise aus Kunststoff, in Transportrichtung 5 der Mattenkette 13 ausgebildet.

Figur 3c zeigt eine Darstellung eine weitere Ausführungsform des Mattenförderers 12 in Seitenansicht, der mit integrierten geraden Bürsten 18 auf der Oberfläche der Mattenkette 13 versehen ist.

Die Oberfläche der Mattenkette 13 nach Figur 3d weist integrierte und in Transportrichtung 5 ausgerichtete Bürsten 18 auf.

Die Oberfläche der Mattenkette 13 nach Figur 3e zeigt zur Kettenmitte 15 ausgerichtete Bürsten 18. Diese Ausführungsform erleichtert beispielsweise, Gebindelagen 2 zu zentrieren, was ebenfalls von Vorteil für die Weiterbeförderung der Gebindelagen 2 sein kann.

Figur 3f veranschaulicht Leisten 19 und/oder Noppen 20 an der Oberfläche der Mattenkette 13. Es können aber auch andere technische Weiterentwicklungen an der Oberfläche der Mattenkette 13 zum Einsatz kommen, die für den Fachmann in naheliegender Weise bekannt sind.

Figur 3g zeigt eine schematische Darstellung einer Beschichtung 21, beispielsweise durch Gummierung, in Seitenansicht der Oberfläche der Mattenkette 13. Alternativ ist auch eine zumindest teilweise kontinuierliche Beschichtung 21 eines Fördergutes mittels eines adhäsiven Mediums bei der gegenwärtigen Erfindung möglich. Dazu wird auf die Oberfläche der Mattenkette 13 zumindest teilweise ein adhäsives Medium aufgebracht, das dann von den Gebindelagen 2 übernommen wird. Somit erhält man auf der Palette, auf der die einzelnen Gebindelagen 2 gestapelt werden, eine Stabilisierung der Gebindelagen 2 untereinander.

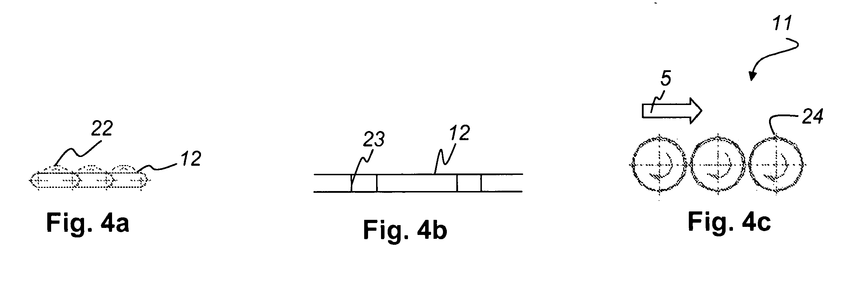

Figuren 4a und 4b zeigen jeweils eine schematische Darstellung eines abgewandelten Mattenförderers 12 in Seitenansicht, wobei der Mattenförderer 12 in Figur 4a integrierte Magnete 22 und damit ein umlaufendes Permanentmagnetsystem aufweist. Die zu überführenden Gebindelagen 2 müssen ferrromagnetische Partikel besitzen, um den Transport der Gebindelagen 2 sicherzustellen.

In Figur 4b ist der Mattenförderer 12 mit einer Vielzahl von Durchbrüchen 23 versehen, wie beispielsweise Löcher, Bohrungen und/oder Schlitze, aber auch Kombinationen von ihnen und weitere Ausführungen, die für den Fachmann in naheliegende Weise bekannt sind. Über diese Durchbrüche 23 wird ein Unterdruck angelegt und somit der Transport der Gebindelagen 2 ermöglicht, ohne dass ein Auseinanderfallen der Gebindelagen 2 während des Transports erfolgt.

Figur 4c zeigt eine schematische Darstellung einen Ausschnitt des Stetigförderers 11 in der Seitenansicht. Der Stetigförderer 11 besitzt eine Vielzahl von Rollen 24, wobei die Gebindelagen 2 mit den in Transportrichtung 5 angetriebenen Rollen 24 überführt werden. Ferner können aber auch andere Ausführungen von Stetigförderern 11 bei der vorliegenden Erfindung genutzt werden, die sich für den Fachmann aus dem Stand der Technik ergeben.

Figur 5a zeigt eine schematische Darstellung einer Ausführungsform einer Antriebseinrichtung 34 der Einzelrollen 35 der Beladestation 31 in Draufsicht. Figur 5b ist eine Seitenansicht und Figur 5c ist eine Schnittansicht des Antriebs 34 der Beladestation 31 entlang der Linie A-A aus Figur 5a. In den Figuren ist erkennbar, dass die Luftleiste 36 bei geschlossenem Jalousiekopf 32 (nicht dargestellt in den Figuren 5a-c) an die Verteiler 37 gedrückt und in den geschlossenen Luftkanal 38 Druckluft geleitet wird. Die einzelnen Druckluftmotoren 39 in den Tragrohren 40 werden über den so erzeugten Druckanschluss angetrieben. Ebenso wie die Kopplung der Druckluft an der Koppelstelle 41 kann so eine elektrische Verbindung hergestellt werden, die einzelne Elektromotoren (nicht dargestellt) in den Rollen 35 antreibt. Die elektrische Verbindung kann auch anstatt einer Koppelleiste durch Schleifkontakte am Verteiler 37 erzeugt werden. Somit ist der Antrieb 34 elektrisch oder pneumatisch möglich.

Figur 6a zeigt eine schematische Perspektivansicht einer anderen Ausführungsform einer Antriebseinrichtung 44 des Jalousiekopfes 32. Figur 6b zeigt einen schematischen Ausschnitt der Riemeneinheit 45 der Antriebseinrichtung 44 des in Figur 6a mit A gekennzeichneten Bereichs. In der hier dargestellten Ausführungsform nach Figur 6a-b sind Treibriemen mit flachem Querschnitt, sogenannte Flachriemen 43, Teil der Antriebseinrichtung 44, da sie einen sehr hohen Antriebswirkungsgrad erreichen. Der Antrieb kann einerseits durch eine unterhalb des Jalousiekopfes 32 ortsfeste angebrachte Riemeneinheit 45 erfolgen, wobei der bewegliche Jalousiekopf 32 auf der Antriebseinrichtung 44 aufsitzt und somit die Gebindelagen 2 in Transportrichtung 5 durch die aktiv angetriebenen Rollen 35 weiter in den Jalousiekopf 32 hinein schiebt.

Figur 7a zeigt eine schematische Perspektivansicht einer weiteren Ausführungsform der Antriebseinrichtung 44 des Jalousiekopfes 32 in Seitenansicht. Hier ist die Antriebseinrichtung 44 für die Rollen 35 am Jalousiekopf 32 in Transportrichtung 5 der Gebindelagen 2 mitfahrend, wobei die Flachriemen 43 in dieser Ausführungsform mit Federn (nicht dargestellt) oder Pneumatikzylindern (nicht dargestellt) an die Tragrolle 49 der Andrückleiste 48 gedrückt werden (siehe Figur 7c). Dies wird in Figur 7b durch einen mit A bezeichneten vergrößerten Ausschnitt der Riemeneinheit 45 nach Figur 7a gezeigt. In Figur 7c ist eine Schnittansicht der Antriebseinrichtung 44 entlang der Linie B-B aus Figur 7a genauer veranschaulicht.

Figur 8a zeigt eine schematische Perspektivansicht einer weiteren Ausführungsform der Antriebseinrichtung 44 des Jalousiekopfes 32 der Beladestation 31 in Seitenansicht. Die Figur 8b zeigt einen mit A bezeichneten vergrößerten Ausschnitt der Riemeneinheit 45 der Antriebseinrichtung 44 nach Figur 8a. Die Antriebseinrichtung 44 ist mit einer Vielzahl von Trommelmotoren 50 in einer Jalousierolle (nicht dargestellt) integriert, wobei der Jalousiekopf 32 auf eine Leiste (nicht dargestellt) mit dem Flachriemen 43 drückt und Federn (nicht dargestellt) einen Gegendruck erzeugen und somit die Gebindelagen 2 in Transportrichtung 5 durch die aktiv angetriebenen Rollen 35 weiter in den Jalousiekopf 32 hinein schiebt.

### Bezugszeichenliste

- 2: Gebindelage
- 5: Transportrichtung
- 7: zusätzliche Bewegungskonstante
- 10: Vorrichtung
- 11: Stetigförderer
- 12: Mattenförderer
- 13: Mattenkette
- 14: Rippe
- 15: Kettenmitte
- 16: wellenförmige Struktur
- 17: sägezahnförmige Struktur
- 18: Bürste
- 19: Leiste
- 20: Noppe
- 21: Beschichtung
- 22: Magnet
- 23: Durchbruch
- 24: Rollen
- 30: Bügel
- 31: Beladestation
- 32: Jalousiekopf
- 34: Antrieb
- 35: Rollen
- 36: Luftleiste
- 37: Verteiler
- 38: Luftkanal
- 39: Druckluftmotor
- 40: Tragrohr
- 41: Koppelstelle
- 43: Flachriemen
- 44: Antriebseinrichtung
- 45: Riemeneinheit
- 48: Andrückleiste
- 49: Tragrolle
- 50: Trommelmotor
- 60: Transportvorrichtung

## Patentansprüche

1. Vorrichtung (10) zum Überführen von gruppierten Gebindelagen (2) in eine Beladestation (31) einer Transportvorrichtung (60), wobei die Beladestation (31) ein Jalousiekopf (32) ist, **dadurch gekennzeichnet, dass** die Vorrichtung (10) einen aktiv angetriebenen Stetigförderer (11) zum Transport der Gebindelagen (2) in den Jalousiekopf (32) umfasst, dass der Jalousiekopf (32) ein Sicherungselement umfasst, das als ein schwenkbarer Bügel (30) ausgebildet ist und die Gebindelagen (2) an der dem Stetigförderer (11) zugewandten Seite sichert und wobei der schwenkbare Bügel (30) eine erst teilweise in den Jalousiekopf (32) überführte Gebindelage (2) jeweils mit einer zusätzlichen Bewegungskomponente (7) in Transportrichtung (5) beaufschlagt.

2. Vorrichtung nach Anspruch 1, **dadurch gekennzeichnet, dass** der Stetigförderer (11) ein Mattenförderer (12) ist.

3. Vorrichtung nach Anspruch 2, **dadurch gekennzeichnet, dass** der Mattenförderer (12) in Transportrichtung (5) der Gebindelagen (2) einen höheren Reibungskoeffizienten aufweist als quer zur Transportrichtung (5) der Gebindelagen (2).

4. Vorrichtung nach Anspruch 3, **dadurch gekennzeichnet, dass** die Gebindelagen (2) auf dem sich bewegenden Mattenförderer (12) reib- und / oder formschlüssig aufliegen.

5. Vorrichtung nach einem der Ansprüche 2 bis 4, **dadurch gekennzeichnet, dass** der Mattenförderer (12) eine gerippte Mattenkette (13) ist.

6. Vorrichtung nach Anspruch 5, **dadurch gekennzeichnet, dass** die gerippte Mattenkette (13) parallel angeordnete Rippen (14) aufweist.

7. Vorrichtung nach Anspruch 5, **dadurch gekennzeichnet, dass** die gerippte Mattenkette (13) Rippen (14) aufweist, die im Winkel von 30 bis 60° zur Transportrichtung (5) der Gebindelage (2) angeordnet sind.

8. Vorrichtung nach Anspruch 5, **dadurch gekennzeichnet, dass** die Oberfläche der gerippten Mattenkette (13) Bürsten (18), Leisten (19) und / oder Noppen (20) aufweist.

9. Vorrichtung nach Anspruch 5, **dadurch gekennzeichnet, dass** die Oberfläche der gerippten Mattenkette (13) beschichtet (21) ist.

10. Vorrichtung nach Anspruch 3, **dadurch gekennzeichnet, dass** der Mattenförderer (12) integrierte Magnete (22) aufweist.

11. Vorrichtung nach Anspruch 1, **dadurch gekennzeichnet, dass**, über die Durchbrüche (23) des Mattenförderers (12) ein Unterdruck erzeugbar ist.

12. Vorrichtung nach einem der Ansprüche 1 bis 11, **dadurch gekennzeichnet, dass** eine Vielzahl von Rollen (35) des Jalousiekopf (32) eine Auflage für die jeweilige Gebindelage (2) bildet.

13. Vorrichtung nach Anspruch 12, **dadurch gekennzeichnet, dass** die Rollen (35) mit einen aktiven Antrieb (34) versehen sind, wobei der aktive Antrieb (34) der Rollen (35) pneumatisch oder elektrisch erfolgt.

14. Verfahren zum Überführen von gruppierten Gebindelagen (2) in eine Beladestation (31) einer Transportvorrichtung (60), wobei die Beladestation (31) ein Jalousiekopf (32) ist, **gekennzeichnet durch** die folgenden Schritte, dass mittels eines aktiv angetriebenen Stetigförderers (11) die Gebindelagen (2) in den Jalousiekopf (32) transportiert werden und dass jeweils eine Gebindelage (2) mittels einnes Sicherungselements des Jalousiekopfes (32) an der dem Stetigförderers (11) zugewandten Seite gesichert wird, wobei
das Sicherungselement ein schwenkbarer Bügel (30) ist, wobei die Gebindelage (2) **durch** den schwenkbaren Bügel (30) in Transportrichtung (5) mit einer zusätzlichen Bewegungskomponente (7) beaufschlagt wird, um sicher zu stellen, dass die Gebindelage (2) vollständig in den Jalousiekopf (32) verschoben wird.

## Claims

1. An apparatus (10) for transferring grouped pack layers (2) into a loading station (31) of a conveying apparatus (60), wherein the loading station (31) is a louver head (32), **characterised in that** the apparatus (10) comprises an actively driven continuous-flow conveyor (11) for the conveying of the pack layers (2) into the louver head (32), that the louver head (32) comprises a securing element which securing element is formed as a pivotable bracket (30) and secures the pack layers (2) on the side facing the continuous-flow conveyor (11) and wherein the pivotable bracket (30) impinges a pack layer (2) which pack layer (2) is firstly partly transferred into the louver head (32) in each case with an additional moving component (7) in the direction of transport (5).

2. The apparatus according to Claim 1 **characterised in that** the continuous-flow conveyor (11) is a mat top conveyor (12).

3. The apparatus according to Claim 2 **characterised in that** the mat top conveyor (12) exhibits a greater coefficient of friction in the direction of transport (5) of the pack layers (2) than transversely with respect to direction of transport (5) of the pack layers (2).

4. The apparatus according to Claim 3 **characterised in that** the pack layers (2) lie on the moving mat top conveyor (12) positively or by friction contact.

5. The apparatus according to one of the Claims 2 to 4 **characterised in that** the mat top conveyor (12) is a ribbed modular conveyor belt (13).

6. The apparatus according to Claim 5 **characterised in that** the ribbed modular conveyor belt (13) exhibits parallelly disposed ribs (14).

7. The apparatus according to Claim 5 **characterised in that** the ribbed modular conveyor belt (13) exhibits ribs (14) which ribs (14) are disposed at an angle of 30 to 60° with respect to the direction of transport (5) of the pack layer (2).

8. The apparatus according to Claim 5 **characterised in that** the surface of the ribbed modular conveyor belt (13) exhibits brushes (18), rods (19) and / or knobs (20).

9. The apparatus according to Claim 5 **characterised in that** the surface of the ribbed modular conveyor belt (13) is coated (21).

10. The apparatus according to Claim 3 **characterised in that** the mat top conveyor (12) exhibits integrated magnets (22).

11. The apparatus according to Claim 1 **characterised in that** a vacuuum can be generated via openings (23) of the mat top conveyor (12).

12. The apparatus according to one of Claims1 to 11 **characterised in that** a plurality of rollers (35) of the louver head (32) forms a support for the respective pack layer (2).

13. The apparatus according to Claim 12 **characterised in that** the rollers (35) are equipped with an active drive (34) wherein the active drive (34) of the rollers (35) takes place pneumatically or electrically.

14. A method for the purpose of transferring grouped pack layers (2) into a loading station (31) of a conveying apparatus (60), the loading station (31) being a louver head (32), **characterised by** the following steps, that the pack layers (2) are conveyed into the louver head (32) by means of an actively driven continuous-flow conveyor (11) and that in each case one pack layer (2) is secured on the side facing the continuous-flow conveyor (11) by means of a securing element of the louver head (32), wherein the securing element is a pivotable bracket (30), wherein the pack layer (2) is impinged by means of the pivotable bracket (30) in the direction of transport (5) with an additional moving component (7) in order to ensure that the pack layer (2) is displaced fully into the louver head (32).

## Revendications

1. Dispositif (10) pour le transfert de couches d'emballages (2) groupées dans une station de chargement (31) d'un dispositif de transport (60), étant donné que la station de chargement (31) est une tête de jalousie (32), **caractérisé en ce que** le dispositif (10) comprend un convoyeur continu (11) à entraînement actif pour le transport des couches d'emballages (2) dans la tête de jalousie (32), **en ce que** la tête de jalousie (32) comprend un élément de fixation qui est formé comme étrier pivotant (30) et fixe les couches d'emballages (2) sur le côté orienté vers le convoyeur continu (11), et étant donné que l'étrier pivotant (30) charge une couche d'emballages (2) transférée seulement partiellement dans la tête de jalousie (32) chaque fois avec une composante de mouvement (7) supplémentaire dans le sens de transport (5).

2. Dispositif selon la revendication 1, **caractérisé en ce que** le convoyeur continu (11) est un convoyeur à tapis (12).

3. Dispositif selon la revendication 2, **caractérisé en ce que** le convoyeur à tapis (12) présente dans le sens de transport (5) des couches d'emballages (2) un coefficient de friction plus élevé que celui qui prévaut transversalement par rapport au sens de transport (5) des couches d'emballages (2).

4. Dispositif selon la revendication 3, **caractérisé en ce que** les couches d'emballages (2) sont posées, entraînées par friction et/ou crabotées, sur le convoyeur à tapis (12) en mouvement.

5. Dispositif selon l'une quelconque des revendications 2 à 4, **caractérisé en ce que** le convoyeur à tapis (12) est une chaîne à tapis nervurée (13).

6. Dispositif selon la revendication 5, **caractérisé en ce que** la chaîne à tapis nervurée (13) présente des nervures (14) disposées parallèlement.

7. Dispositif selon la revendication 5, **caractérisé en ce que** la chaîne à tapis nervurée (13) présente des nervures (14) qui sont disposées en angle de 30 à 60° par rapport au sens de transport (5) de la couche d'emballages (2).

8. Dispositif selon la revendication 5, **caractérisé en ce que** la surface de la chaîne à tapis nervurée (13) présente des brosses (18), rives (19) et/ou noppes (20).

9. Dispositif selon la revendication 5, **caractérisé en ce que** la surface de la chaîne à tapis nervurée (13) présente un revêtement (21).

10. Dispositif selon la revendication 3, **caractérisé en ce que** le convoyeur à tapis (12) présente des aimants (22) intégrés.

11. Dispositif selon la revendication 1, **caractérisé en ce qu'**une dépression peut être générée à travers des brèches (23) du convoyeur à tapis (12).

12. Dispositif selon l'une quelconque des revendications 1 à 11, **caractérisé en ce qu'**une pluralité de rouleaux (35) de la tête de jalousie (32) forme un support pour la couche d'emballages (2) concernée.

13. Dispositif selon la revendication 12, **caractérisé en ce que** les rouleaux (35) sont dotés d'un entraînement actif (34), étant donné que l'entraînement actif (34) des rouleaux (35) est pneumatique ou électrique.

14. Procédé pour le transfert de couches d'emballages (2) groupées dans une station de chargement (31) d'un dispositif de transport (60), étant donné que la station de chargement (31) est une tête de jalousie (32), **caractérisé par** les étapes suivantes : en ce que les couches d'emballages (2) sont transportées dans la tête de jalousie (32) au moyen d'un convoyeur continu (11) à entraînement actif, et en ce que chaque fois une couche d'emballages (2) est fixée au moyen d'un élément de fixation de la tête de jalousie (32) sur le côté orienté vers le convoyeur continu (11), étant donné que l'élément de fixation est un étrier pivotant (30), étant donné que la couche d'emballages (2) est chargée via l'étrier pivotant (30) dans le sens de transport (5) avec une composante de mouvement (7) supplémentaire afin de garantir que la couche d'emballages (2) soit entièrement poussée dans la tête de jalousie (32).
